# EUROPÄISCHE PATENTSCHRIFT

(11) **EP 2 526 450 B1**
(45) Veröffentlichungstag und Bekanntmachung des Hinweises auf die Patenterteilung: **13.01.2016**
(21) Anmeldenummer: 11703572.5
(22) Anmeldetag: 17.01.2011
(51) Int. Cl.: E02F 5/12, G02B 6/50, E02F 5/08, E02F 5/10

(54) **VERFAHREN UND VORRICHTUNG ZUR EINBRINGUNG EINES ROHRES FÜR OPTISCHE KABEL IN EINEN FESTEN VERLEGEGRUND**
METHOD AND DEVICE FOR LAYING OF A CONDUIT FOR OPTICAL FIBER CABLES INTO SOLID GROUND
MÉTHODE ET APPAREIL POUR LA POSE DE CÂBLES À FIBRES OPTIQUES DANS UN SOL MASSIF

(30) Priorität: 21.01.2010 AT 772010
(43) Veröffentlichungstag der Anmeldung: 28.11.2012
(73) Patentinhaber: Pichler, Jan Michael, 3341 Ybbsitz (AT)
(72) Erfinder: PICHLER, Alois, A-3341 Ybbsitz (AT)
(74) Vertreter: Patentanwaltskanzlei Hübscher
(86) Internationale Anmeldenummer: PCT/AT2011/000025
(87) Internationale Veröffentlichungsnummer: WO 2011/088486

(56) Entgegenhaltungen:
- EP-A1- 0 162 623
- EP-A2- 0 861 455
- FR-A1- 2 766 634
- US-A1- 2004 165 957
- "AUTOLOGGER - A UNIQUE RANGE OF AXLE DETECTION SENSORS", HIGHWAYS, DR PUBLICATIONS LTD. CROYDON, GB, Bd. 57, Nr. 1951, 1. Juli 1989 (1989-07-01), Seite 9/10,13, XP000052670, ISSN: 0142-6147

## Beschreibung

Die Erfindung betrifft ein Verfahren zur Einbringung zumindest eines Rohres für zumindest ein optisches Kabel in einen festen Verlegegrund mit Hilfe einer Verlegevorrichtung, insbesondere eine Asphalt- oder Betondecke, wobei zumindest eine Nut in den Verlegegrund gefräst bzw. geschnitten wird und das zumindest eine Rohr in die zumindest eine Nut eingelegt wird.

Weiters betrifft die gegenständliche Erfindung eine Vorrichtung zur Einbringung zumindest eines Rohres für zumindest ein optisches Kabel in einen festen Verlegegrund, insbesondere eine Asphalt- oder Betondecke, mit einer Fräs- bzw. Schneideinrichtung zum Fräsen bzw. Schneiden zumindest einer Nut in den Verlegegrund und zumindest einer Trommel, auf welcher das zumindest eine einzulegende Rohr aufgewickelt ist.

Heutzutage sind weltweit viele Haushalte noch über Kupferkabel mit entsprechenden Datennetzen zur Übertragung von Telefon-, Fernseh- oder Computersignalen verbunden. Während die diversen Kommunikationsnetze verschiedener Informationsdienste bereits nach und nach von Kupfer- auf Glasfaserkabel umgerüstet wurden und dadurch die Datenübertragungsraten wesentlich erhöht werden konnten, hinkt die Umrüstung der Kupferkabel auf Glasfaserkabel zum Endverbraucher noch nach. Durch innovative Verfahren, wie zum Beispiel der in der EP 1 362 398 A beschriebenen grabenlosen Entfernung von Drähten aus Kabelrohren, wird nun die Umrüstung der Leitungen zu den Endverbrauchern mit vertretbarem Aufwand möglich. Wird das von den Kupferdrähten befreite Kabelrohr eines Erdkabels zur Aufnahme optischer Kabel verwendet, wäre der Haushalt für eine gewisse Zeitspanne zwischen der Entfernung der Kupferkabel und der Neuverlegung der optischen Kabel von den jeweiligen Kommunikationsnetzen getrennt. Da ein derartiger Zustand in heutiger Zeit inakzeptabel wäre, ist es erforderlich, zumindest während dieser Zeitspanne für eine alternative Datenverbindung zu sorgen.

Zur Überbrückung der Datenverbindung werden drahtlose Systeme angewendet, über welche der Endverbraucher mit den gewünschten Kommunikationsnetzen verbunden wird. Der Aufwand für die entsprechenden Sender und Empfänger ist jedoch relativ hoch. Auch müssen die entsprechenden Komponenten über Batterien mit elektrischer Energie versorgt werden und vor Diebstahl entsprechend gesichert werden.

Alternativ dazu kann auch eine Bypass-Datenleitung installiert werden, über die der Endverbraucher während der Zeit der Umrüstung der Datenleitung mit den entsprechenden Kommunikationsnetzen verbunden wird. Frei verlaufende Datenleitungen, welche an sich rasch und einfach verlegt werden könnten, haben sich aufgrund der Anfälligkeit, für Witterung und Zerstörung nicht bewährt. Der Aufwand für die Verlegung von Erdkabeln hingegen ist wiederum sehr hoch und wirtschaftlich häufig nicht tragbar.

Aus diesem Grunde wurden bereits Verfahren und Vorrichtungen zum raschen und kostengünstigen Einbringen optischer Kabel in einen festen Verlegegrund entwickelt. Beispielsweise beschreibt die EP 0 861 455 B1 ein Verfahren zum Einbringen zumindest eines optischen Kabels in einen festen Verlegegrund, mit welchem der Verlegeaufwand reduziert werden kann.

Auch die EP 1 619 767.A1 beschreibt eine derartige Methode zur Verlegung optischer Kabel in einen festen Verlegegrund.

Die EP 0 162 623 A1 betrifft ein Verfahren zum Verlegen von Drainagerohren im Erdreich, wobei keine Maßnahmen zum Schutz des Rohres vor Beschädigung gesetzt werden.

Die US 2004/165957 A1 betrifft ein Verfahren zum Verlegen eines Rohres für optische Kabel in einem festen Verlegegrund, wobei das Rohr mit einem Mantel aus zusammendrückbarem Material geschützt wird.

Schließlich zeigt die DE 38 05 344 A1 eine universell anwendbare Vorrichtung zur Herstellung von allgemeinen Gräben.

Bei den bekannten Verlegeverfahren wird in der Regel eine Nut in den festen Verlegegrund gefräst bzw. geschnitten, danach das zumindest eine optische Kabel bzw. ein Rohr zur Aufnahme zumindest eines optischen Kabels in die Nut eingelegt und ein entsprechendes Füllmaterial, wie zum Beispiel Bitumen, über das Kabel bzw. ein das optische Kabel aufnehmendes Rohr in die Nut gefüllt und ausgehärtet. Obgleich diese Verlegeverfahren gegenüber herkömmlichen Verfahren zur Verlegung von Erdkabeln rascher und kostengünstiger durchführbar sind, ist der Aufwand dennoch relativ hoch. Auch kommt es durch den unzureichenden Halt des optischen Kabels bzw. Rohres in der Nut stellenweise zu einem unerwünschten Austreten des optischen Kabels bzw. Rohres aus der Nut, bevor das Füllmaterial ausgehärtet ist. In der Folge kann es zu einer Beschädigung oder Zerstörung des optischen Kabels und somit zu einer Unterbrechung der Datenleitung kommen.

Bei Verwendung von Heißbitumen zum Verfüllen der Nut kann es darüber hinaus zu einer Beschädigung des optischen Kabels oder des die optischen Kabel umgebenden Rohres kommen.

Ein weiterer Nachteil bei den bekannten Verfahren besteht darin, dass häufig eine zu tiefe Nut in den Verlegegrund geschnitten wird und beispielsweise eine Fahrbahndecke dadurch stellenweise durchschnitten wird, sodass das Rohr für das optische Kabel ungeschützt im darunter liegenden losen Erdreich verläuft und beschädigt werden kann. Darüber hinaus kann es beim Durchschneiden einer Asphaltdecke zum teilweisen Aufbrechen der Asphaltdecke kommen, was wiederum in Zeit- und Kosten-aufwändigen Arbeitsschritten saniert werden muss.

Die Aufgabe der vorliegenden Erfindung besteht daher in der Schaffung eines oben genannten Verfahrens und einer oben genannten Vorrichtung, insbesondere für die temporäre Einbringung zumindest eines Rohres für zumindest ein optisches Kabel in einen festen Verlegegrund, durch welche eine rasche und einfache Verlegung unter Vermeidung oder Reduktion der oben genannten Nachteile möglich wird. Insbesondere sollen die in die Nut eingelegten Rohre bzw. die darin zu verlegenden optischen Kabel vor Beschädigung geschützt werden.

In verfahrensmäßiger Hinsicht wird diese Aufgabe dadurch gelöst, dass zumindest eine Seitenwand der zumindest einen Nut mit einer Auflagestufe zur Auflage eines aushärtbaren, elastischen und/oder festen Füllmaterials, mit dem nach dem Einlegen des zumindest einen Rohres das allenfalls verbleibende Volumen jeder Nut ausgefüllt wird oder eines entsprechend der Nut geformten Rohres ausgebildet wird, wodurch zum Schutz des in der zumindest einen Nut eingelegten zumindest einen Rohres bzw. der darin verlegten optischen Kabel eine auf die Oberfläche des Verlegegrundes einwirkende Kraft über die zumindest eine Auflagestufe in den Verlegegrund abgeleitet wird. Durch die stufenförmige Ausbildung zumindest einer Seitenwand der Nut wird eine Auflage für ein entsprechend der Nut geformtes Rohr oder das allfällige Füllmaterial geschaffen, wodurch eine auf die Oberfläche des Verlegegrundes einwirkende Kraft über diese Auflagestufe in den Verlegegrund abgeleitet werden kann, ohne dass unzulässig hohe Kräfte auf das Rohr einwirken, welche zu einer Beschädigung der darin verlegten optischen Kabel führen könnten. Die Auflagestufe muss nicht gezwungenermaßen im rechten Winkel zur Seitenwand der Nut angeordnet sein, sondern kann auch in einem Winkel dazu verlaufen. Prinzipiell kann lediglich eine Auflagestufe in einer Seitenwand der Nut angeordnet werden, sodass eine Nut mit einem Querschnitt in Form eines verkehrten "L" resultiert. Das erfindungsgemäße Verfahren dient insbesondere zur lediglich vorübergehenden bzw. temporären Einbringung optischer Kabel in einen festen Verlegegrund, um beispielsweise während der Umrüstarbeiten eines Erdkabels von Kupferkabel auf optische Kabel eine ununterbrochene Verbindung des Verbrauchers mit den jeweiligen Daten- oder Kommunikationsnetzen zu gewährleisten. Ebenso kann mit dem gegenständlichen Verfahren parallel zu einem bestehenden Kupferkabelnetz ein unabhängiges Glasfasernetz für verschiedene Ausbaustufen (FTTH fiber to the home, FTTB fiber to the building, FTTC fiber to the curb) aufgebaut werden. Das Verfahren kann besonders rasch und somit kostengünstig durchgeführt werden und bietet für die einzulegenden optischen Kabel einen optimalen Schutz, sodass die Verbindung mit dem Verbraucher nicht gefährdet wird. Das Verfahren kann bei jedem möglichen festen Verlegegrund, insbesondere einer Asphalt- oder Betondecke einer Fahrbahn oder eines Gehweges, angewendet werden. Der jeweilige Hausanschluss eines Verbrauchers wird dabei möglichst auf kürzestem Wege mit der nächstmöglichen Anbindungsstelle des Daten- oder Kommunikationsnetzes verbunden. Sollten im Verlauf Kreuzungspunkte auftreten, können diese beispielsweise durch stellenweise. tiefere Nuten oder durch die Anordnung entsprechender Verbindungseinrichtungen bewältigt werden. Obgleich in den nachfolgenden Beschreibungen häufig nur vom einfachsten Fall der Anfertigung nur einer Nut und dem Einlegen nur eines Rohres für optische Kabel ausgegangen wird, umfasst das Verfahren selbstverständlich auch die Anfertigung mehrerer vorzugsweise parallel verlaufender Nuten und auch den Fall, dass mehrere Rohre in jede Nut eingelegt werden. Im Falle der Anordnung mehrerer Rohre pro Nut können diese auch von einer gemeinsamen Umhüllung umgeben sein, oder auch ein einstückiges Rohr mit mehreren Kanälen zur Aufnahme jeweils mehrerer optischer Kabel vorgesehen sein. Sowohl das Rohr als auch die genannte Umhüllung können in Form eines Hohlzylinders vorliegen, jedoch auch anderen beliebigen Querschnitt mit einem oder mehreren Kanälen für die Aufnahme der optischen Kabel aufweisen. Wenn die jeweilige Nut nicht durch das zumindest eine Rohr vollständig ausgefüllt wird, ist vorgesehen, dass das verbleibende Volumen in jeder Nut mit einem entsprechenden Füllmaterial ausgefüllt wird.

Gemäß einem weiteren Merkmal der Erfindung können auch beide Seitenwände der zumindest einen Nut mit einer Auflagestufe ausgebildet werden, resultierend in einem im Wesentlichen T-förmigen Querschnitt der Nut. Wird das allenfalls verbleibende Volumen der Nut nach dem Einlegen des zumindest einen Rohres mit einem aushärtbaren Füllmaterial ausgefüllt, so liegt dieses ausgehärtete Füllmaterial auf den beiden symmetrisch angeordneten Auflagestufen auf und es können auftretende Kräfte entsprechend abgeführt werden. Das aushärtbare Füllmaterial kann auch im ausgehärteten Zustand elastisch verformbar sein, wodurch die Entstehung von Spalten zwischen der Innenwand der Nut und dem Füllmaterial vermieden werden kann.

Zusätzlich kann in der zumindest einen Auflagestufe in zumindest einer Seitenwand jeder Nut eine zusätzliche Nut gefräst oder geschnitten werden, wodurch zwischen der Nut für die Aufnahme des Rohres und der zumindest einen zusätzlichen Nut ein Steg entsteht. Über diesen Steg, vorzugsweise beide Stege bei einer Nut mit beiderseits angeordneten Auflagestufen und zusätzlichen Nuten, wird die Nut durch das allenfalls angeordnete Füllmaterial oder auch entsprechend geformte Rohr in horizontaler Richtung fixiert. Sollte der feste Verlegegrund durch die Nut für die Aufnahme des Rohres stellenweise durchschnitten werden, kann sie durch diese Stege bzw. Schultern zusammengehalten werden. Dadurch resultiert wiederum ein besserer Schutz für das in der Nut verlegte zumindest eine Rohr bzw. die darin verlegten optischen Kabel.

Vorteilhafterweise wird die zumindest eine Nut mit einer Breite ≤ 60mm in den Verlegegrund gefräst bzw. geschnitten. Die Tiefe beträgt beispielsweise 150mm, je nach Beschaffenheit und Art des festen Verlegegrunds. Die Tiefe wird so gewählt, dass ein Durchschneiden des Verlegegrunds möglichst verhindert werden kann. Andererseits wird die Tiefe insbesondere bei Anwendung in Asphaltstraßen größer gewählt, um ein nachträgliches Abfräsen der Fahrbahn ohne Beschädigung der optischen Kabel ermöglicht wird. Beispielsweise wird eine sogenannte Überdeckung (also der Abstand der Fahrbahnoberfläche zur obersten Fläche des Kabels oder der Umhüllung) von 80mm von Straßenbetreibern gewünscht oder gefordert. Durch die angegebenen relativ geringen Dimensionen der Nut kann der Fräs- bzw. Schneidvorgang relativ rasch vorgenommen werden und die Gefahr eines stellenweisen kompletten Durchschneidens des festen Verlegegrunds wesentlich reduziert werden.

Vorteilhafterweise wird die Reibung zwischen dem zumindest einen in die zumindest eine Nut eingelegten Rohr und den Seitenwänden der zumindest einen Nut erhöht, sodass ein selbsttätiges Austreten des zumindest einen Rohres aus der zumindest einen Nut verhindert wird. Durch diese weitere erfindungsgemäße Maßnahme der Erhöhung der Reibung zwischen dem zumindest einen in die zumindest eine Nut eingelegten Rohr und den Seitenwänden der zumindest einen Nut wird verhindert bzw. erschwert, dass das Rohr vor dem allfälligen Auffüllen der Nut mit einem Füllmaterial aus der Nut austritt und beschädigt werden kann. Für die Erhöhung der Reibung zwischen dem Rohr und den Seitenwänden der Nut gibt es verschiedene Möglichkeiten, welche im Folgenden angeführt werden.

Gemäß einem weiteren Merkmal der Erfindung ist vorgesehen, dass nach dem Einlegen des zumindest einen Rohres in die zumindest eine Nut ein Granulat oder dergl. mit einer Korngröße von 0,4 bis 1,5mm, vorzugsweise ein Gummigranulat, in die zumindest eine Nut eingebracht wird, wodurch ein Verkeilen des zumindest einen Rohres innerhalb der zumindest einen Nut bewirkt wird. Durch diese Maßnahme kann ein selbsttätiges Austreten des zumindest einen Rohres aus der zumindest einen Nut einfach und wirkungsvoll verhindert werden. Dabei wird das Granulat vorzugsweise unmittelbar nach dem Einbringen des Rohres in die Nut auf das Rohr gestreut, wodurch das Granulat in den Spalt zwischen Seitenwand der Nut und Außenfläche des Rohres rieselt und das Rohr in der Nut quasi fixiert wird. Als Granulat kommen prinzipiell verschiedenste körnige Materialien mit vorzugsweise unregelmäßiger und kantiger Gestalt mit einer entsprechenden Korngröße von 0,4 bis 1,5mm in Frage. Besonders geeignet ist die Verwendung von Gummigranulat, welches aufgrund der Eigenelastizität zu einer besseren Verkeilung des Rohres innerhalb der Nut führt. Aber auch Sand kann als Granulat eingesetzt werden. Das Granulat kann auch eingefärbt sein, wodurch bei Schneid- oder Fräsarbeiten am Verlegegrund auf die in der Nut verlegten optischen Kabel hingewiesen werden kann.

Eine alternative oder zusätzliche Methode zur Erhöhung der Reibung zwischen dem Rohr und der Nut kann das Versehen der Außenseite des Rohres zumindest teilweise mit einem reibungserhöhenden Belag oder reibungserhöhenden Elementen oder dem Aufrauen der Außenseite des Rohres realisiert werden. Ein reibungserhöhender Belag kann beispielsweise durch stellenweises Aufbringen eines Granulats oder dergl. an die Außenseite des Rohres erfolgen. Beispielsweise kann das Rohr an seiner Außenseite stellenweise mit einem Klebstoff versehen und vor dem Aushärten des Klebstoffs mit Sand oder geeignet gestalteten reibungserhöhenden Elementen bestreut werden, sodass das Rohr nach dem Einlegen in die Nut nicht mehr aus der Nut austreten kann.

Ebenso ist ist es möglich, vor dem Einlegen des Rohres in die Nut das Rohr mit einer Umhüllung zu versehen, welche an der Außenseite einen reibungserhöhenden Belag oder reibungserhöhende Elemente aufweist oder entsprechend aufgeraut ist. Die Umhüllung mit dem reibungserhöhenden Belag, den reibungserhöhenden Elementen oder der aufgerauten Außenseite kann entsprechend vorgefertigt werden und erst vor dem Verlegen über das zumindest eine Rohr angeordnet werden.

Nach dem Einlegen des zumindest einen Rohres in die zumindest eine Nut kann ein Abdeckband in die zumindest eine Nut eingelegt werden. Das Abdeckband, das verschiedenartig gestaltet sein kann, bildet eine Trennwand zwischen dem Rohr und dem allfälligen Füllmaterial und schützt das Rohr sowie die darin verlaufenden optischen Kabel entsprechend. Das Abdeckband kann beispielsweise aus Schaumstoff bestehen und sich entsprechend an die Außenseite des Rohres anschmiegen. Auch Abdeckbänder aus härterem Material, insbesondere Stahl, welche auch verschiedenartiges Profil aufweisen können, sind zum Schutz des zumindest einen Rohres bzw. der darin verlaufenden optischen Kabel denkbar. Ein im Profil dachförmig verlaufendes Abdeckband aus Stahl kann auch eine Beschädigung des Rohres durch spitze Gegenstände, wie zum Beispiel Nägel, wirkungsvoll verhindern, da diese spitzen Gegenstände beim allfälligen Einschlagen in die Nut abgelenkt werden und somit das Rohr und die optischen Kabel vor einer Beschädigung mit dem spitzen Gegenstand geschützt werden können. Das Abdeckband kann auch mehrteilig, beispielsweise aus einer Schaumstoffschicht an der Unterseite, welche dem Rohr zugewandt ist, und einer Metallschicht an der Oberseite, welche dem allfälligen Füllmaterial zugewandt ist, ausgebildet sein. Das Abdeckband kann gleichzeitig mit dem zumindest einen Rohr oder auch in einem zeitlich versetzten Arbeitsschritt nach dem Einbringen des Rohres in die Nut eingebracht werden.

Das allenfalls verbleibende Volumen jeder Nut kann mit einem aushärtbaren Füllmaterial, vorzugsweise einem biologisch abbaubaren und wasserlöslichen Zweikomponentenkleber, ausgefüllt werden. Nach der Aushärtzeit wird somit das zumindest eine Rohr in der Nut zusätzlich und langfristig vor einem Austreten aus der Nut geschützt. Im Gegensatz zu dem üblicherweise verwendeten Bitumen zum Ausfüllen der Nut eigenen sich Zweikomponentenkleber, welche bei niedrigeren Temperaturen aushärten, besonders. Dadurch wird das Rohr, welches bereits mit den optischen Kabeln versehen sein kann, auch nicht thermisch belastet. Falls erforderlich, kann eine gewisse Beschleunigung der Aushärtung durch geringfügige Anhebung der Temperatur, beispielsweise durch einen warmen Luftstrom, erfolgen.

Alternativ zur Verwendung eines aushärtbaren Füllmaterials kann das allenfalls verbleibende Volumen jeder Nut auch mit einem elastischen und/oder festen Füllmaterial ausgefüllt werden. Dabei wird das verbleibende Volumen jeder Nut durch einen Streifen des elastischen und/oder festen Füllmaterials in entsprechender Größe verschlossen. Bei dieser Methode kann das Füllmaterial entsprechend in die Nut eingepresst werden und selbsttätig in der Nut halten, oder auch mittels entsprechender Klebstoffe in das verbleibende Volumen der Nut eingeklebt werden.

Alternativ zu den obigen Methoden kann auch der Querschnitt des zumindest einen Rohres, welches in die zumindest eine Nut eingebracht wird, allenfalls zusammen mit einer Umhüllung im Wesentlichen dem Querschnitt der zumindest einen Nut entsprechend. In diesem Fall wird die Nut vollständig durch das zumindest eine einzubringende Rohr ausgefüllt. In diesem Fall ist das Rohr und das Füllmaterial einstückig ausgebildet. Es wird also ein längliches Material hergestellt, welches einen Querschnitt aufweist, der im Wesentlichen dem Querschnitt der Nut entspricht, und in die Nut eingelegt. Das Rohr kann einen oder auch mehrere Kanäle für die Aufnahme der optischen Kabel aufweisen und beispielsweise auch ein Abdeckband oder Schutzmaterial enthalten. Entsprechende Elastizität vorausgesetzt, kann ein derart eingebrachtes Rohr in die Nut eingepresst werden und darin selbstständig halten.

Alternativ dazu oder zusätzlich kann ein solches Rohr, allenfalls mit der Umhüllung, auch in die Nut eingeklebt werden. Dabei kann der allfällige Klebstoff auf das derartig gestaltete Rohr vor der Verlegung in die Nut oder auch alternativ dazu bzw. zusätzlich dazu in die Nut eingebracht werden. Auch kann bereits werkseitig ein doppelseitiges Klebeband an der Unterseite und allenfalls an den Seitenwänden sowie möglicherweise auch an der Oberseite des Rohres vorgesehen sein, um das Rohr in der Nut oder auch außerhalb der Nut, beispielsweise an einer Hauswand oder einem Brückenpfeiler oder dergl., zu befestigen.

Vorzugsweise wird die zumindest eine Nut zusammen mit der zumindest einen Auflagestufe mit zumindest einem kreisförmigen Sägeblatt mit einem Durchmesser von 400 bis 500mm vorzugsweise im Nassverfahren gefräst bzw. geschnitten. Bei einer Tiefe der Nut von beispielsweise 150mm ist somit nur ein Teil des kreisförmigen Sägeblattes während des Schneidvorgangs im Verlegegrund, wodurch ein kurvenförmiger Verlauf der Nut mit engeren Radien hergestellt werden kann. Beispielsweise sind Radien im Bereich von 2m möglich. Dadurch können Hindernisse entlang des Verlegeweges, wie zum Beispiel Kanaldeckel öder dergl., leicht umgangen werden und die zumindest eine Nut in entsprechenden bogenförmigen Verläufen um diese Hindernisse angeordnet werden. Je nachdem, ob eine Nut mit einer seitlichen Auflagestufe oder beiderseits angeordneten Auflagestufen hergestellt werden soll, können zwei oder drei Sägeblätter mit unterschiedlichem Durchmesser nebeneinander angeordnet werden. Alternativ dazu kann natürlich auch ein entsprechend gestaltetes Fräswerkzeug, mit dem eine entsprechend gestaltete Nut hergestellt werden kann, vorgesehen sein.

Um das Einlegen des zumindest einen Rohres in die zumindest eine Nut unmittelbar nach der Herstellung der Nut zu ermöglichen, wird das beim Fräsen bzw. Schneiden der zumindest einen Nut abgetragene Material vorzugsweise abgesaugt. Dadurch wird nach dem Fräs- bzw. Schneidvorgang eine saubere Schnittfuge erzielt.

Insbesondere beim Fräsen bzw. Schneiden der zumindest einen Nut im Nassverfahren ist es von Vorteil, wenn die Nut vor dem Einlegen des zumindest einen Rohres, vorzugsweise mit warmer unter Druck stehender Luft, getrocknet wird. Eine entsprechend trockene Nut gewährleistet auch einen guten Halt allfälliger Klebstoffe. Zum Trocknen der Nut können in effizienter Weise die Abgase der motorisch betriebenen Fräs- bzw. Schneideinrichtung verwendet werden. Auch kann das Trocknen mit einem entsprechenden Luftstrahl und das Absaugen entsprechend kombiniert werden, indem die Leitung zur Abgabe der Luft gegenüber der Absaugleitung angeordnet wird.

In die Nut oder in zusätzlich angeordnete Nuten parallel dazu können Rohre mit sogenannten Schneidschutzfasern eingelegt werden, sodass beim allfälligen Schneiden durch die Nut darauf hingewiesen wird, dass sich im Verlegegrund Kabel befinden. Die Schneidschutzfasern umwickeln das Fräs- bzw. Schneidwerkzeug und blockieren dieses oder zeigen zumindest an, dass sich im Verlegegrund ein zu schützendes Kabel befindet.

Gelöst wird die erfindungsgemäße Aufgabe auch durch eine oben genannte Vorrichtung, wobei die Fräs- bzw. Schneideinrichtung zum Fräsen bzw. Schneiden zumindest einer Nut mit einer Auflagestufe zur Auflage eines aushärtbaren, elastischen und/oder festen Füllmaterials oder eines entsprechend der Nut geformten Rohres in zumindest einer Seitenwand der Nut, und allenfalls mit einer Einrichtung zur Einbringung eines aushärtbaren, elastischen und/oder festen Füllmaterials in das allenfalls verbleibende Volumen jeder Nut ausgebildet ist, wodurch zum Schutz des in der zumindest einen Nut eingelegten zumindest einen Rohres bzw. der darin verlegten optischen Kabel eine auf die Oberfläche des Verlegegrundes einwirkende Kraft über die zumindest eine Auflagestufe in den Verlegegrund abgeleitet wird. Eine derartige Vorrichtung kann relativ einfach und kostengünstig hergestellt werden. Zu den dadurch erzielbaren Vorteilen wird auf die obige Beschreibung der Verfahrensmerkmale der Erfindung verwiesen.

Die Fräs- bzw. Schneideinrichtung kann zum Fräsen bzw. Schneiden zumindest einer Nut mit jeweils einer Auflagestufe in jeder Seitenwand der Nut zur Bildung einer Nut mit im Wesentlichen T-förmigem Querschnitt ausgebildet sein. Eine derartige Fräs- bzw. Schneideinrichtung kann durch ein kreisförmiges Schneidblatt mit beiderseits angeordneten Schneid- bzw. Sägeblättern geringeren Durchmessers realisiert werden. Auch ein entsprechendes Fräswerkzeug ist möglich.

Gemäß einem weiteren Merkmal der Erfindung ist die Fräs- bzw. Schneideinrichtung zum Fräsen bzw. Schneiden einer zusätzlichen Nut in der Auflagestufe in zumindest einer Seitenwand der Nut ausgebildet. Eine derartige Fräs- bzw. Schneideinrichtung kann durch fünf kreisförmige Schneid- bzw. Sägeblätter realisiert werden, wobei das mittlere Sägeblatt den größten Durchmesser, die daran beiderseits angeordneten Sägeblätter den kleinsten Durchmesser und die äußersten Sägeblätter einen Durchmesser, der zwischen dem Durchmesser des größten und des kleinsten Sägeblattes liegt, aufweisen.

Vorteilhafterweise ist die Fräs- bzw. Schneideinrichtung zum Fräsen bzw. Schneiden zumindest einer Nut mit einer Breite ≤ 60mm in den Verlegegrund ausgebildet. Die Tiefe der Nut wird an die jeweiligen Gegebenheiten entsprechend angepassst. Wie bereits oben erwähnt, kann bei einer derartigen Nut mit relativ geringen Dimensionen eine relativ rasche und einfache Herstellung erzielt werden.

Vorteilhafterweise ist eine Einrichtung zur Erhöhung der Reibung zwischen dem zumindest einen Rohr und den Seitenwänden der zumindest einen Nut vorgesehen, sodass ein selbsttätiges Austreten des zumindest einen Rohres aus der zumindest einen Nut verhinderbar ist.

Die Einrichtung zur Erhöhung der Reibung zwischen dem zumindest einen Rohr und den Seitenwänden der zumindest einen Nut kann durch eine mit einem Behälter für ein Granulat oder dergl. verbundene Dosiereinrichtung gebildet sein, sodass nach dem Einlegen des zumindest einen Rohres ein Granulat oder dergl. mit einer Korngröße von 0,4 bis 1,5mm, vorzugsweise ein Gummigranulat, aber beispielsweise auch Sand in die zumindest eine Nut einbringbar ist. Ein entsprechender Behälter und eine zugehörige Dosiereinrichtung kann relativ einfach unter Ausnützung der Schwerkraft ausgebildet sein. Natürlich können auch Einrichtungen zum aktiven Fördern des Granulats, wie zum Beispiel entsprechende Drucklufteinrichtungen, angeordnet werden.

Die Einrichtung zur Erhöhung der Reibung zwischen dem zumindest einen Rohr und den Seitenwänden der zumindest einen Nut kann auch durch eine Einrichtung zum Versehen der Außenseite des zumindest einen Rohres zumindest teilweise mit einem reibungserhöhenden Belag oder reibungserhöhenden Elementen oder zum Aufrauen der Außenseite gebildet sein.

Ebenso kann die Einrichtung zur Erhöhung der Reibung zwischen dem zumindest einen Rohr und den Seitenwänden der zumindest einen Nut durch eine Einrichtung zum Versehen des zumindest einen Rohres mit einer Umhüllung, welche an der Außenseite einen reibungserhöhenden Belag oder reibungserhöhende Elemente aufweist oder aufgeraut ist, gebildet sein.

Gemäß einem weiteren Merkmal der Erfindung ist eine Vorrichtung zum Aufwickeln zumindest eines Abdeckbandes vorgesehen, welches zumindest eine Abdeckband nach oder gleichzeitig mit dem Einlegen des zumindest einen Rohres in die zumindest eine Nut eingelegt wird. Wie bereits oben erwähnt, kann ein derartiges Abdeckband zum Schutz des zumindest einen Rohres verwendet werden. Es ist auch möglich, dass das Rohr zusammen mit dem Abdeckband gemeinsam auf einer Trommel oder dergl. aufgewickelt und gleichzeitig in die Nut eingelegt wird oder sogar das Rohr mit integriertem Abdeckband vorliegt.

Die allfällige Einrichtung zur Einbringung eines Füllmaterials in das allenfalls verbleibende Volumen jeder Nut kann durch einen Behälter für ein aushärtbares Füllmaterial, vorzugsweise einen biologisch abbaubaren oder wasserlöslichen Zweikomponentenkleber, und eine mit dem Behälter verbundene Dosiereinrichtung gebildet sein. Eine solche Abgabeeinrichtung für ein aushärtbares Füllmaterial kann relativ einfach und kostengünstig hergestellt werden, wodurch die Gesamtkosten der Verlegevorrichtung nicht wesentlich erhöht werden.

Alternativ dazu kann die allfällige Einrichtung zur Einbringung eines Füllmaterials in das allenfalls verbleibende Volumen jeder Nut auch durch eine Einrichtung zur Lagerung eines elastischen und/oder festen Füllmaterials und eine Einrichtung zum Einbringen des Füllmaterials in die zumindest eine Nut gebildet sein. Je nach Konstruktion und Beschaffenheit des elastischen und/oder festen Füllmaterials kann die Lagereinrichtung und Einbringeinrichtung verschiedenartig, beispielsweise durch eine Trommel und eine Rolle zum Einpressen des Füllmaterials in die Nut, gebildet sein.

Wie bereits oben erwähnt, ist die Fräs- bzw. Schneideinrichtung durch zumindest ein Sägeblatt mit einem Durchmesser von vorzugsweise 400mm bis 500mm gebildet. Im Falle der gleichzeitigen Herstellung mehrerer Nuten sind vorzugsweise mehrere Sägeblätter parallel zueinander angeordnet. Auch eine Anordnung zweier in einem Winkel zueinander angeordneter Sägeblätter zum Anfertigen einer Nut mit im Wesentlichen dreieckigem Querschnitt oder die Verwendung eines Spezialfräskopfes, der eine entsprechende Nutform erzeugt, ist denkbar.

Vorteilhafterweise ist eine Absaugeinrichtung zum Absaugen des beim Fräsen bzw. Schneiden der zumindest einen Nut abgetragenen Materials vorgesehen.

Weiters kann eine Vorrichtung zum Trocknen der zumindest einen Nut vor dem Einlegen des zumindest einen Rohres vorgesehen sein, welche beispielsweise durch Zuleitung der Abgase einer motorisch betriebenen Fräs- bzw. Schneideinrichtung gebildet sein kann.

Zusätzlich kann eine Vorrichtung zum Aufwickeln zumindest eines Rohres mit sogenannten Schneidschutzfasern vorgesehen sein, welches zumindest eine Rohr in die Nut oder in zusätzlich angeordnete Nuten parallel dazu eingelegt wird. Die Schneidschutzfasern umwickeln das Fräs- bzw. Schneidwerkzeug und blockieren dieses oder zeigen zumindest an, dass sich im Verlegegrund ein zu schützendes Kabel befindet.

Vorteilhafterweise sind sämtliche Komponenten der Verlegevorrichtung auf einem vorzugsweise selbstfahrenden Wagen angeordnet. Durch eine derartige Verlegevorrichtung ist es möglich, entsprechende Rohre für die Aufnahme von optischen Kabeln in relativ hoher Geschwindigkeit zu verlegen. Beispielsweise sind Geschwindigkeiten im Bereich einiger Meter pro Minute praktisch erzielbar. Die optischen Kabel können nachträglich in das zumindest eine Rohr eingebracht, vorzugsweise eingeblasen, werden oder können theoretisch bereits in dem zumindest einen Rohr vor der Verlegung angeordnet werden.

Die vorliegende Erfindung wird anhand der beigefügten Zeichnungen näher erläutert. Darin zeigen:
Fig. 1 bis Fig. 6 verschiedene Beispiele von nach dem gegenständlichen Verfahren eingebrachten Rohren für optische Kabel in einem festen Verlegegrund;
Fig. 7 eine schematische Darstellung einer Ausführungsform einer Verlegevorrichtung;
Fig. 8 eine Ausführungsform einer Fräs- bzw. Schneideinrichtung einer erfindungsgemäßen Vorrichtung zur Einbringung zumindest eines Rohres für zumindest ein optisches Kabel in einen festen Verlegegrund;
Fig. 9 und 10 zwei Beispiele bevorzugter Ausführungsformen eines Rohres, welches in die Nut eingebracht wird;
Fig. 11 eine schematische Ansicht eines Anwendungsfalles, bei dem die optischen Kabel in einem entsprechenden Rohr zu einem Haus geführt werden;
Fig. 12 einen Querschnitt durch ein auf einer Fahrbahn verlegtes Rohr für die Aufnahme optischer Kabel;
Fig. 13 eine weitere Ausführungsform einer Fräs- bzw. Schneideinrichtung einer erfindungsgemäßen Vorrichtung zur Einbringung zumindest eines Rohres für zumindest ein optisches Kabel in einen festen Verlegegrund;
Fig. 14 eine Variante einer Nut für das Einlegen zumindest eines Rohres für optische Kabel in einen festen Verlegegrund;
Fig. 15 ein für die Herstellung der Nut gemäß Fig. 14 geeignetes Fräs- bzw. Schneidwerkzeug; und
Fig. 16 eine weitere Variante einer Nut für das Einlegen zumindest eines Rohres für optische Kabel in einen festen Verlegegrund, wobei zusätzlich Schnittschutzfasern angeordnet sind.

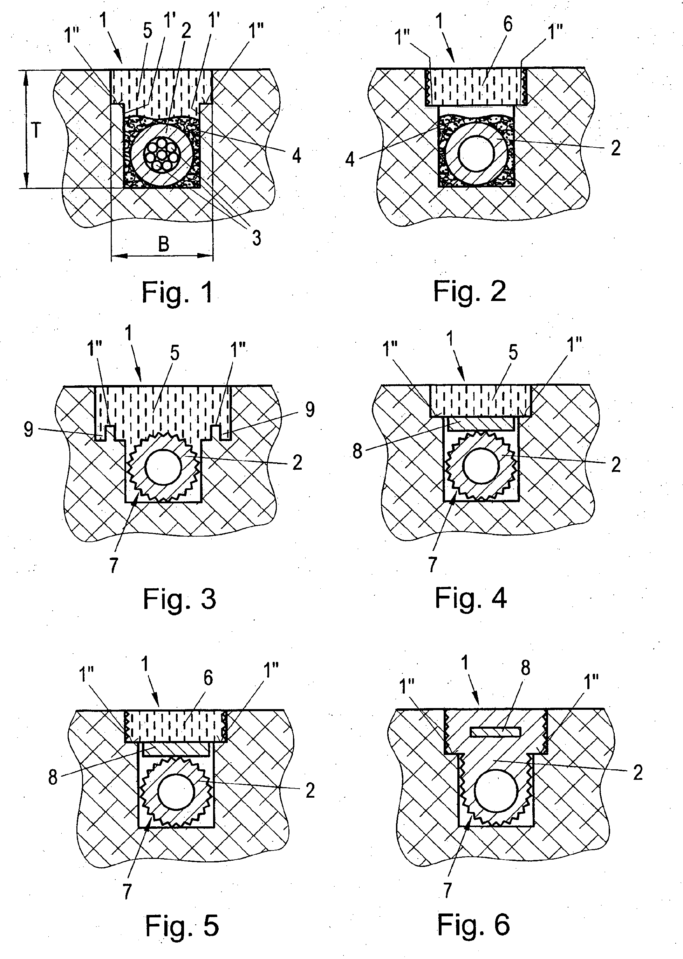

Die Fig. 1 bis 6 zeigen nach verschiedenen Verfahrensvarianten gemäß der vorliegenden Anmeldung hergestellte Nuten für die Aufnahme zumindest eines Rohres für zumindest ein optisches Kabel in einem festen Verlegegrund im Querschnitt.

Fig. 1 zeigt eine Nut 1 mit zwei Auflagestufen 1'' in jeder Seitenwand 1', resultierend in einem im Wesentlichen T-förmigen Querschnitt der Nut 1. Eine solche Nut 1 kann durch Fräsen oder Schneiden mit einem entsprechenden Werkzeug, insbesondere zumindest einem rotierenden Sägeblatt oder einem Fräswerkzeug hergestellt werden. Vorzugsweise ist die gesamte Nut 1, jedenfälls aber die zumindest eine Auflagestufe 1", innerhalb des festen Verlegegrunds angeordnet. Da die Nut 1, vorzugsweise, aber nicht ausschließlich, für die vorübergehende Einbringung eines Kabels verwendet wird, kann die Tiefe T der Nut 1 beispielsweise 150mm und die Breite B der Nut 1 ≤ 60mm bewusst niedrig gewählt werden, um den Verlegeaufwand ebenfalls gering halten zu können und eine relativ hohe Verlegegeschwindigkeit zu erzielen. Die Nut 1 dient zur Aufnahme zumindest eines Rohres 2, in welches zumindest ein optisches Kabel 3 eingebracht werden kann. Nach dem Einlegen des zumindest einen Rohres 2 in die Nut 1 kann die Reibung zwischen dem Rohr 2 und den Seitenwänden 1' der Nut 1 dadurch erhöht werden, dass ein Granulat 4 oder dergl. in die Nut 1 eingebracht wird. Das Granulat 4 oder dergl. weist eine Korngröße auf, die es dem Granulat 4 oder dergl. ermöglicht in den entstehenden Spalt zwischen der Außenseite des Rohres 2 und den Seitenwänden 1' der Nut 1 zumindest teilweise einzudringen was zu einem Fixieren des Rohres 2 innerhalb der Nut 1 führt. Auf diese Weise wird ein selbsttätiges Austreten des Rohres 2 aus der Nut 1 verhindert, bevor eine Fixierung mit einem entsprechenden Füllmaterial 5 vorgenommen wird. Beim dargestellten Beispiel handelt es sich um ein aushärtbares Füllmaterial 5, beispielsweise einen Zweikomponentenkleber, der in flüssiger oder zähflüssiger Form in das verbleibende Volumen der Nut 1 nach dem Einlegen des zumindest einen Rohres 2 eingebracht und dann allenfalls unter Zuhilfenahme von Warmluft zur Beschleunigung des Trocknungsvorgangs ausgehärtet wird. Durch die erfindungsgemäße zumindest eine Auflagestufe 1" in der Nut 1 können Kräfte, die beispielsweise durch ein über den Verlegegrund fahrendes Fahrzeug auf das Füllmaterial 5 ausgeübt werden, in den Verlegegrund abgeführt und das Rohr 2 und somit die darin verlegten optischen Kabel 3 vor unzulässig hohen Kräften geschützt werden. Selbstverständlich kann auch nur einseitig der Nut 1 eine Auflagestufe 1'' in einer Seitenwand 1' der Nut 1 angeordnet sein, sodass die Nut 1 einen Querschnitt in Form eines auf den Kopf gestellten "L" aufweist (nicht dargestellt). Die die Auflagestufe 1" festlegenden Flächen müssen nicht zwingend einen rechten Winkel einschließen.

Bei der Variante gemäß Fig. 2 wird das in die Nut 1 eingebrachte Rohr 2 ebenfalls mit einem Granulat 4 in der Nut 1 fixiert und danach jedoch ein vorgefertigtes Füllmaterial 6 aus elastischem oder festem Material in das verbleibende Volumen der Nut 1 eingesetzt. Das Füllmaterial 6 kann in die Nut 1 eingepresst oder eingewalzt werden und liegt auf den Auflagestufen 1'' der Nut 1 auf. Das Füllmaterial 6 kann so gestaltet sein, dass die Reibung an den Seitenwänden 1' der Nut 1 erhöht wird und somit ein selbsttätiges Austreten des Füllmaterials 6 aus der Nut 1 verhindert oder erschwert wird. Dies ist im dargestellten Beispiel durch die raue Oberfläche der Seitenwände des Füllmaterials 6 angedeutet. Zusätzlich kann das Füllmaterial 6 auch in die Nut 1 eingeklebt werden.

Bei der Variante gemäß Fig. 3 ist die Außenseite des Rohres 2 mit einem reibungserhöhenden Belag 7 oder entsprechenden reibungserhöhenden Elementen versehen oder entsprechend aufgeraut ausgebildet, sodass ein selbsttätiges Austreten des Rohres 2 aus der Nut 1 verhindert bzw. erschwert werden kann. Danach wird das verbleibende Volumen der Nut 1 wiederum mit einem aushärtbaren Füllmaterial 5 ausgefüllt. Weiters ist in jeder Auflagestufe 1" der Nut 1 eine zusätzliche Nut 9 angeordnet, wodurch eine Art Widerlager gebildet wird. Das aushärtbare Füllmaterial 5 hält somit die Nut 1 über die zwischen der Nut 1 und den zusätzlichen Nuten 9 ausgebildeten Stege in horizontaler Richtung quer zum Verlauf der Nut 1 zusammen und verhindert ein Aufreißen des Verlegegrundes, wenn beispielsweise der Verlegegrund, z.B. die Asphaltdecke, durch die Nut 1 durchschnitten wird. Die Nut 1, die Auflagestufen 1" sowie die allfälligen zusätzlichen Nuten 9 müssen nicht zwingend im Wesentlichen rechteckigen Querschnitt aufweisen, sondern können verschiedenste Gestalt haben. Jedenfalls wird bei der Ausführungsform gemäß Fig. 3 bzw. einer ähnlichen Variante die Nut 1 durch das aushärtbare Füllmaterial 5, ein vorgefertigtes Füllmaterial 6 oder ein entsprechend gestaltetes Rohr 2 bzw. Umhüllung des Rohres 2 quer zum Verlauf der Nut 1 zusammengehalten bzw. verzahnt.

Bei der Variante gemäß Fig. 4 wird ebenfalls ein Rohr 2 mit einem reibungserhöhenden Belag 7, reibungserhöhenden Elementen oder einer entsprechenden aufgerauten Außenseite in die Nut 1 eingebracht und danach ein Abdeckband 8 über das Rohr 2 in die Nut 1 eingelegt. Das Abdeckband 8 dient zum Schutz des Rohres 2 bzw. der darin verlaufenden optischen Kabel 3 und kann aus Kunststoff oder Metall bestehen. Neben einem mechanischen Schutz des Rohres 2 wird dadurch auch ein direkter Kontakt des Rohres 2 mit dem aushärtbaren Füllmaterial 5, welches anschließend an das Abdeckband 8 in die Nut 1 einschließlich den seitlichen Auflagestufen 1" eingefüllt wird, verhindert.

Bei der Variante gemäß Fig. 5 ist nach dem Einbringen des Abdeckbandes 8 ein elastisches oder festes Füllmaterial 6 in das verbleibende Volumen der Nut 1 eingelegt worden.

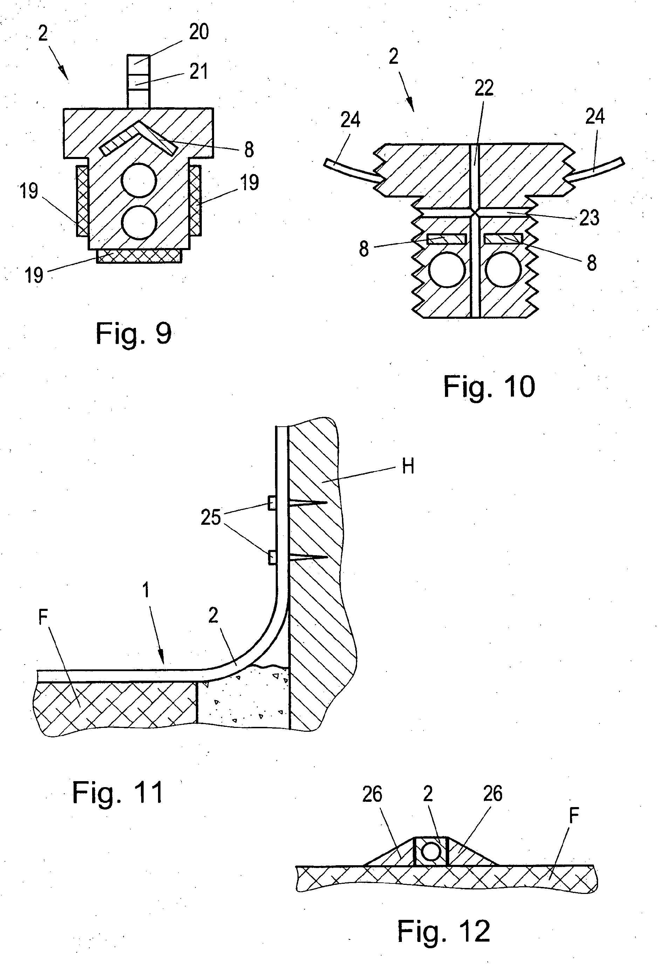

Die Variante gemäß Fig. 6 zeigt ein Rohr 2, dessen Querschnitt im Wesentlichen dem Querschnitt der Nut 1 entspricht, also im dargestellten Beispiel ein T-förmiges Rohr 2, in dem zusätzlich ein Abdeckband 8 integriert ist. Die Seitenflächen des Rohres 2 sind mit einem reibungserhöhenden Belag 7, reibungserhöhenden Elementen oder einer entsprechenden aufgebauten Oberfläche versehen, sodass ein selbsttätiges Austreten des Rohres 2 aus der Nut 1 verhindert oder erschwert werden kann. Die Abdeckbänder 8 können verschiedenartig ausgebildet sein, beispielsweise X-förmigen, Zickzack-förmigen oder dergl. Querschnitt aufweisen, Wenn das Rohr 2 durch ein Abdeckband 8 mit einem Querschnitt in Art eines verkehrten "V" ausgebildet ist, kann eine Zerstörung des Rohres 2 bzw. der darin verlaufenden optischen Kabel 3, insbesondere durch spitze Gegenstände, wie zum Beispiel Nägel, wirkungsvoll verhindert werden, da diese spitzen Gegenstände durch das Abdeckband 8 mit dachförmigem Querschnitt abgelenkt werden (siehe Fig. 9).

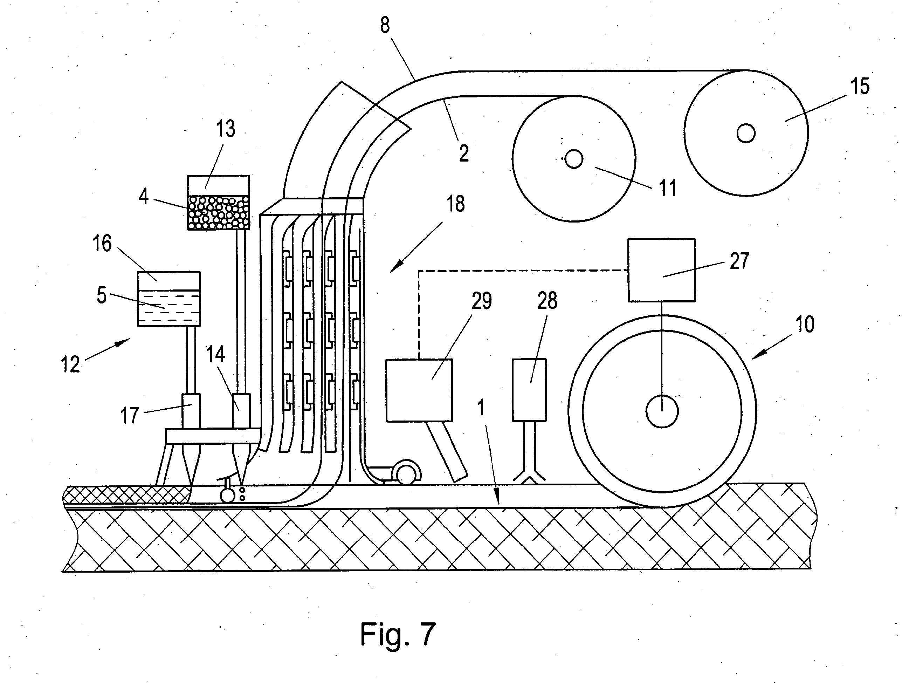

Fig. 7 zeigt eine schematische Darstellung einer erfindungsgemäßen Vorrichtung zur Einbringung zumindest eines Rohres 2 für zumindest ein optisches Kabel 3 in einen festen Verlegegrund. Mit einer Fräs- bzw. Schneideinrichtung 10, insbesondere ein oder mehrere Schneidblätter wird die zumindest eine Nut 1 in den Verlegegrund eingebracht. Danach wird das vorzugsweise auf einer Trommel 11 aufgewickelte zumindest eine Rohr 2 in die Nut 1 eingebracht und allenfalls auch ein auf einer entsprechenden Vorrichtung 15 aufgewickeltes Abdeckband 8 über dem Rohr 2 in die Nut 1 eingebracht. Ein in einem Behälter 13 befindliches Granulat 4 kann über eine entsprechende Dosiereinrichtung 14 auf das Rohr 2 gestreut werden, wodurch ein selbsttätiges Austreten des zumindest einen Rohres 2 aus der zumindest einen Nut 1 verhinderbar ist. Das allenfalls verbleibende Volumen der Nut 1 über dem Rohr 2 und allenfalls Abdeckband 8 wird unter Zuhilfenahme einer Einrichtung 12 zur Einbringung eines Füllmaterials aufgefüllt. Im gezeigten Beispiel gemäß Fig. 7 ist ein aushärtbares Füllmaterial 5 in einem Behälter 16 vorgesehen und wird über eine entsprechende Dosiereinrichtung 17 in die Nut 1 dosiert. Nach dem Aushärten des aushärtbaren Füllmaterials 5, ist die Verlegung des Rohres 2 abgeschlossen und der Verlegegrund kann wieder seiner ursprünglichen Nutzung, beispielsweise als Fahroder Gehweg, zugeführt werden. Die optischen Kabel werden nach dem fertig verlegten Rohr 2 in dessen Kanäle vorzugsweise eingeblasen. Die Fräs- bzw. Schneideinrichtung 10 ist mit einem entsprechenden Antrieb 27, beispielsweise einem Verbrennungsmotor oder einem Elektromotor, verbunden. Zusätzlich kann eine Absaugeinrichtung 28 zum Absaugen des beim Fräsen bzw. Schneiden der zumindest einen Nut 1 abgetragenen Materials vorgesehen sein. Weiters kann eine Vorrichtung 29 zum Trocknen der zumindest einen Nut 1 vor dem Einlegen des zumindest eines Rohres 2 vorgesehen sein, welche beispielsweise durch Zuleitung der Abgase des als Verbrennungsmotor ausgebildeten Antriebes 27 der Fräs- bzw. Schneideinrichtung 10 gebildet sein kann, wie durch die strichlierte Linie zwischen dem Antrieb 27 und der Trocknungseinrichtung 29 angedeutet.

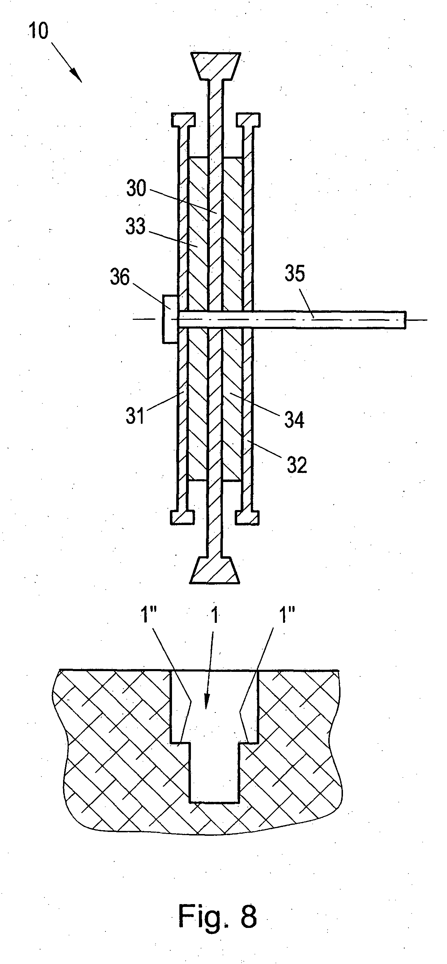

Fig. 8 zeigt eine Ausführungsform einer Fräs- bzw. Schneideinrichtung 10 zur Herstellung einer Nut 1 mit zwei seitlichen Auflagestufen 1", wie im unteren Teil der Abbildung angedeutet wurde. Die Schneid- bzw. Fräseinrichtung 10 besteht aus drei Sägeblättern 30, 31, 32, welche durch entsprechende Scheiben 33, 34 voneinander beabstandet wurden. Das mittlere Sägeblatt 30 weist den größten Durchmesser auf und dient zur Bildung jener Nut 1, in welche das zumindest eine Rohr 2 eingelegt werden soll. Beispielsweise kann das Sägeblatt 30 einen Durchmesser von 400mm und eine Schneidbreite von 15-20mm aufweisen. Die seitlichen Sägeblätter 31, 32 dienen zur Herstellung der Auflagestufen 1" in den Seitenwänden 1' der Nut 1 und weisen entsprechend verringerten Durchmesser gegenüber dem Sägeblatt 30 auf. Beispielsweise können die Sägeblätter 31, 32 einen Durchmesser von 240mm und eine Schneidstärke bzw. einen Überstand über die Schneidbreite des Sägeblattes 30 von wenigen Millimetern aufweisen. Die Sägeblätter 30, 31, 32 und Scheiben 33, 34 werden über eine Welle 35 mit dem Antrieb 27 (nicht dargestellt) verbunden, wobei eine entsprechende Sicherungsmutter 36 am Ende der Welle 35 angeordnet ist. Die Fräs- bzw. Schneideinrichtung 10 kann auch durch ein entsprechend gestaltetes Fräswerkzeug, das an die gewünschte Form der Nut 1 angepasst ist, gebildet sein.

Fig. 9 zeigt eine Ausführungsform eines Rohres 2, dessen Querschnitt im Wesentlichen dem Querschnitt der Nut 1 entspricht. Im dargestellten Ausführungsbeispiel weist das Rohr 2 im Wesentlichen T-förmigen Querschnitt mit zwei Kanälen für die Aufnahme der optischen Kabel (nicht dargestellt) auf. Während ein Kanal, vorzugsweise der untere für die Aufnahme optischer Kabel 3, für die Datenübertragung vorgesehen ist, kann der andere Kanal auch für andere Zwecke, beispielsweise die Installation entsprechender Leitungen für ein Verkehrsleitsystem, verwendet werden. Die Leitungen zur Bildung eines Verkehrsleitsystems können auch im oberen Bereich eines derartig gestalteten Rohres 2 integriert sein. Ein solches System kann zur Orientierung von Kraftfahrzeugen und zur Kombination mit einem Navigationssystem verwendet werden. Natürlich können in die vorgefertigte Nut 1 neben dem Rohr 2 für die Aufnahme optischer Kabel 3 auch weitere Leitungen auch lose eingelegt und dann allenfalls unter Zwischenlage von Abdeckbändern mit einem Füllmaterial 5, 6 verschlossen werden. Ein Abdeckband 8 ist im Rohr 2 integriert und dachförmig bzw. in Form eines auf den Kopf gestellten "V" ausgebildet. Zusätzlich können an der Unterseite, den Seitenflächen, aber auch der Oberseite des Rohres 2 doppelseitige Klebebänder 19 oder Klebeschichten angeordnet sein, über welche das Rohr 2 in der Nut 1 aber auch an anderen Gegenständen, sofern das Rohr 2 außerhalb der Nut 1 verlegt wird, befestigt werden kann. An der Oberseite des Rohres 2 können vorzugsweise in regelmäßigen Abständen vorgefertigte Laschen 20 oder dergl. angeordnet sein, in denen jeweils eine Bohrung 21 angeordnet ist. Derartige Laschen 20 können dazu verwendet werden, das Rohr 2 zur Aufnahme der optischen Kabel an bestimmten Gegenständen zu befestigen. Zu diesem Zweck können beispielsweise Drähte, Schnüre oder dergl. durch die Bohrung 21 geführt und damit eine Befestigung des Rohres 2 an bestimmten Gegenständen vorgenommen werden. Sollten die Laschen 20 bei einem in einer Nut im Verlegegrund angeordneten Rohr 2 nicht benötigt werden oder stören, können diese auch nachträglich entfernt werden, was durch entsprechende Sollbruchstellen erleichtert werden kann.

Fig. 10 zeigt eine alternative Ausführungsform eines Rohres 2 im Querschnitt, wobei vorzugsweise in regelmäßigen Abständen Durchführungen 22, 23 angeordnet sind, welche zur Fixierung des Rohres 2 in der Nut 1 oder auch außerhalb der Nut 1 dienen können. Dabei können sowohl vertikale Durchführungen 22 als auch horizontale Durchführungen 23 angeordnet sein. Durch die Durchführungen 22, 23 können entsprechende Nägel, Schrauben, Seile oder Drähte eingebracht werden, mit Hilfe derer eine Fixierung des Rohres 2 in der Nut 1 oder auch außerhalb der Nut 1 erfolgen kann. Zum selben Zweck können vorzugsweise ebenfalls in regelmäßigen Abständen im Rohr 2 Befestigungsseile 24 oder dergl. integriert sein. Eine solche Befestigung des Rohres 2 ist insbesondere dann erforderlich, wenn das Rohr 2 aus der Nut 1 im Verlegegrund herausgeführt wird und beispielsweise zu einem Haus eines mit den optischen Kabeln zu versorgenden Haushaltes oder über eine Brücke oder ein anderes Hindernis geführt werden muss. Über die genannten Befestigungshilfen kann eine einfache und rasche Befestigung an entsprechenden Bauwerken oder dergl. erfolgen.

Fig. 11 zeigt eine Anwendung des beschriebenen Verfahrens unter Zuhilfenahme eines entsprechenden Rohres 2 bei der Versorgung eines Haushaltes mit einer Verbindung über optische Kabel. In einer Fahrbahn F verläuft das Rohr 2 in einer entsprechende angefertigten Nut 1 bis vor das Haus H des zu versorgenden Haushaltes. Im dargestellten Beispiel wird das Rohr 2 vom Ende der Nut 1 in der Fahrbahn F entlang der Wand des Hauses H geführt und dort beispielsweise über ein doppelseitiges Klebeband 19 (siehe Fig. 9) oder über Befestigungselemente 25, wie Nägel oder Schrauben, die durch entsprechende Durchführungen 22, 23 (siehe Fig. 10) im Rohr 2 angeordnet werden, fixiert. Auf diese Weise kann rasch eine entsprechende Versorgung des Haushaltes mit den entsprechenden Datenleitungen vorgenommen werden.

Schließlich zeigt Fig. 12 einen Querschnitt im Bereich einer Fahrbahn F, auf der ein Rohr 2 ohne Anfertigung einer Nut 1 auf die Oberfläche der Fahrbahn F aufgelegt wird. Eine derartige Überbrückung kann beispielsweise dann erforderlich sein, wenn in die Fahrbahn F keine Nut 1 eingebracht werden kann oder darf (beispielsweise aus Gründen des Denkmalschutzes). Im Falle eines auf der Fahrbahn F oder dergl. aufgelegten Rohres 2 ist es zweckmäßig, seitlichweben dem Rohr 2 entsprechende keilförmige Elemente 26 anzuordnen, um das Rohr 2 und somit die darin verlaufenden optischen Kabel entsprechend zu schützen und beispielsweise das Überfahren mit einem Fahrzeug zu ermöglichen. Je nach Anwendungsfall können die Elemente 26 aus verschiedenen Materialien, wie zum Beispiel Kunststoff aber auch Metall, angefertigt sein und zur Sicherheit mit der Fahrbahn F und/oder dem Rohr 2 verbunden sein.

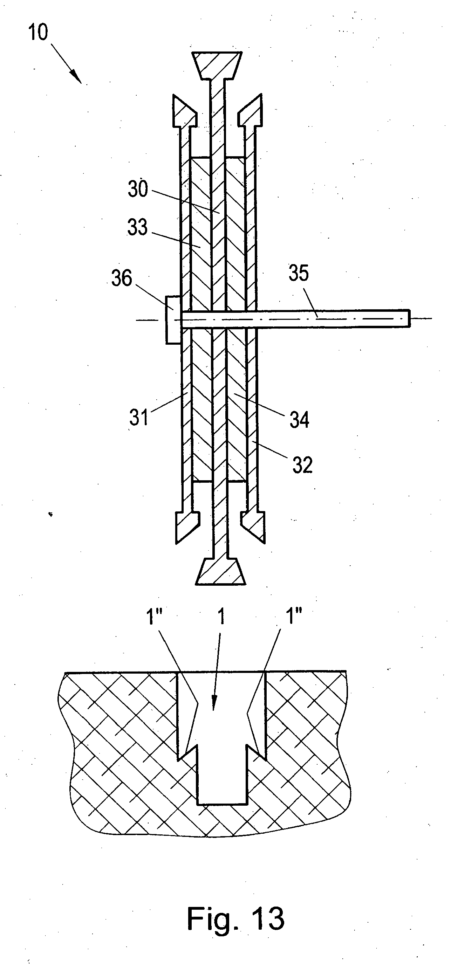

Fig. 13 zeigt eine gegenüber Fig. 8 abgewandelte Ausführungsform einer Fräs- bzw. Schneideinrichtung 10 zur Herstellung einer Nut 1, wobei die zwei seitlichen Auflagestufen 1" nach außen hin schräg abfallend ausgebildet sind. Dies wird durch entsprechende äußere Sägeblätter 31, 32 der Fräs- bzw. Schneideinrichtung 10 erzielt. Durch die schräg nach außen verlaufenden Auflagestufen 1" wird die Nut 1 nach dem Ausfüllen mit einem Füllmaterial 6 (nicht dargestellt) durch dieses zusammengehalten und ein Aufbrechen, beispielsweise durch Frost oder im Falle des Durchschneidens des festen Verlegegrundes verhindert. Der Winkel der Schräge der Auflagestufe 1" kann verschiedenartig gewählt werden. Darüberhinaus muss die Auflagestufe 1" nicht gezwungenermaßen eben sein, sondern kann auch einen kurvenförmigen oder anderen Verlauf im Querschnitt aufweisen.

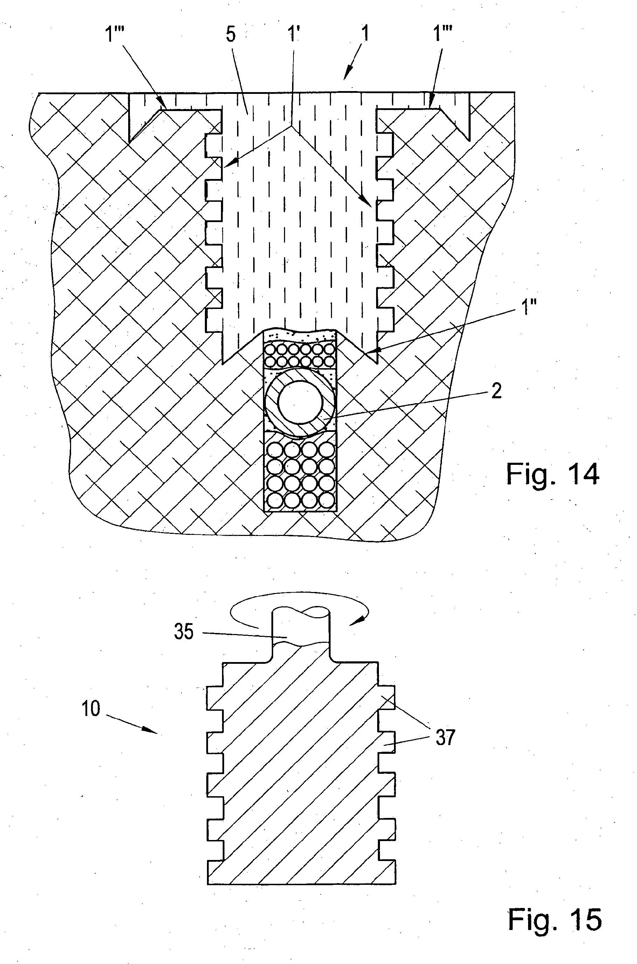

Fig. 14 zeigt eine weitere Variante einer Nut 1 in einem festen Verlegegrund, wobei die seitlichen Auflagestufen 1'', wie bei der Ausführungsvariante gemäß Fig. 13 schräg nach außen abfallend verlaufen. Zusätzlich sind zwei weitere Auflagestufen 1''' ebenfalls wieder mit einem nach außen schräg abfallenden Profil angeordnet. Diese Form der Nut 1 kann mit einer entsprechend gestalteten Fräs- bzw. Schneideinrichtung 10 (nicht dargestellt) relativ leicht vorzugsweise in einem Arbeitsgang hergestellt werden. Nach dem Einlegen zumindest eines Rohres 2 für optische Kabel oder dergleichen wird der oberhalb der Auflagestufe 1" angeordnete Teil der Nut 1 mit einem Füllmaterial 5, beispielsweise einem Zweikomponentenkleber oder Bitumen ausgefüllt. Durch die schräg verlaufenden Abschnitte in den Auflagestufen 1'' und den zusätzlichen Auslagestufen 1"' hält das Füllmaterial 5 die Nut 1 entsprechend zusammen und verhindert ein Aufbrechen derselben. Zusätzlich können an den Seitenwänden 1' der Nut 1 Strukturen angeordnet werden, durch die eine bessere Verbindung des Füllmaterials 5 mit dem festen Verlegegrund erzielt werden kann. Im dargestellten Ausführungsbeispiel sind diese Strukturen durch entsprechend gestaltete in Längsrichtung der Nut 1 verlaufende Abstufungen gebildet.

Fig. 15 zeigt ein Ausführungsbeispiel eines Fräs- bzw. Schneidwerkzeugs 10 zur Herstellung solcher Strukturen in den Seitenwänden 1' der Nut 1. Entsprechend den Strukturen, sind Schneiden 37 am Fräs- bzw. Schneidwerkzeug 10 angeordnet. Das Fräs- bzw. Schneidwerkzeug 10 wird um eine Welle 35 gedreht und im Wesentlichen horizontal durch die vorher hergestellte Nut 1 geführt. Natürlich können auch andere Strukturen in den Seitenwänden 1' der Nut 1 mit anderen Fräs- bzw. Schneidwerkzeugen hergestellt werden, die eine Verbesserung der Verbindung zwischen Füllmaterial 6 und festem Verlegegrund herbeiführen.

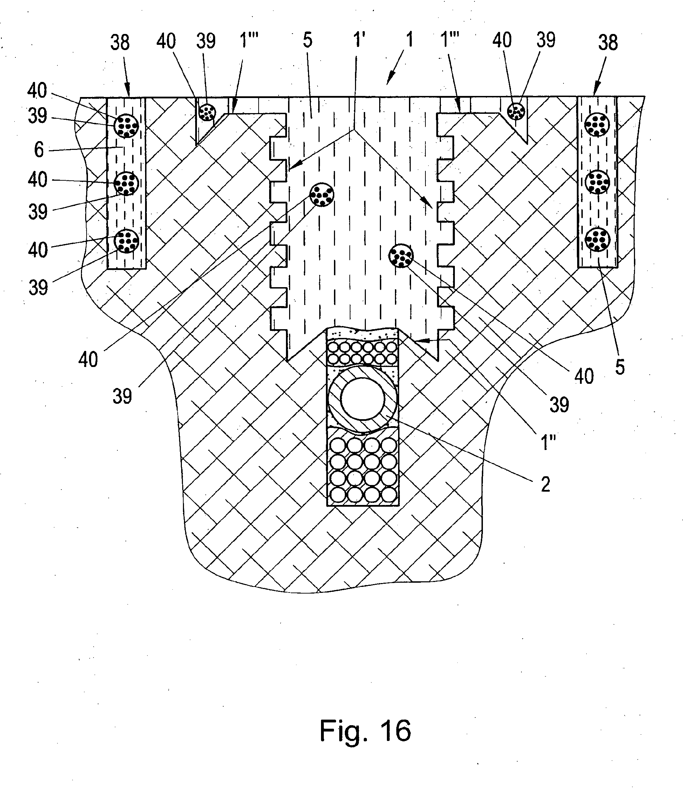

Fig. 16 zeigt eine ähnliche Ausführungsform einer Nut 1, wie Fig. 14, wobei innerhalb des Füllmaterials 5 in der Nut 1 oder innerhalb des Füllmaterials 5 zusätzlich angeordneter Nuten 38 Rohre 39 angeordnet sind, in welchen sogenannte Schnittschutzfasern 40 verlaufen. Diese Schnittschutzfasern 40 umwickeln das Fräs- bzw. Schneidwerkzeug beim Versuch die Nut 1 samt darin angeordneten Komponenten zu Durchschneiden und blockieren dieses bzw. signalisieren zumindest, dass sich im festen Verlegegrund ein Kabel befindet. Die Rohre 39 mit den Schnittschutzfasern 40 können an mehreren geeigneten Stellen innerhalb des Füllmaterials 5 angeordnet werden. Zusätzlich oder alternativ dazu kann auch das Füllmaterial 5 oder vorgefertigte Füllmaterial 6 entsprechend eingefärbt werden, und die Trasse dadurch entsprechend markiert werden. Bei Arbeiten am festen Verlegegrund wird dadurch auf die in der Nut 1 verlaufenden optischen Kabel 3 hingewiesen und es kann eine Beschädigung der optischen Kabel 3 verhindert werden. Auch kann das oben erwähnte Abdeckband 8 derartige Schnittschutzfasern 40 enthalten oder aus solchen bestehen.

Die im Verlegegrund hergestellte Nut 1 dient hauptsächlich, aber nicht ausschließlich, der Aufnahme zumindest eines Rohres 2 für optische Kabel 3. Natürlich kann die hergestellte Nut 1 für die Aufnahme verschiedenster weiterer Leitungen oder dgl. für verschiedenste Zwecke, beispielsweise das oben erwähnte Verkehrsleitsystem, verwendet werden.

## Patentansprüche

1. Verfahren zur Einbringung zumindest eines Rohres (2) für zumindest ein optisches Kabel (3) in einen festen Verlegegrund, insbesondere eine Asphalt- oder Betondecke, mit Hilfe einer Verlegevorrichtung, wobei zumindest eine Nut (1) in den Verlegegrund gefräst bzw. geschnitten wird und das zumindest eine Rohr (2) in die zumindest eine Nut (1) eingelegt wird, **dadurch gekennzeichnet, dass** zumindest eine Seitenwand (1') der zumindest einen Nut (1) mit einer Auflagestufe (1'') zur Auflage eines aushärtbaren, elastischen und/oder festen Füllmaterials (5, 6), mit dem nach dem Einlegen des zumindest einen Rohres (2) das allenfalls verbleibende Volumen jeder Nut (1) ausgefüllt wird oder eines entsprechend der Nut (1) geformten Rohres (2) ausgebildet wird, wodurch zum Schutz des in der zumindest einen Nut (1) eingelegten zumindest einen Rohres (2) bzw. der darin verlegten optischen Kabel (3) eine auf die Oberfläche des Verlegegrundes einwirkende Kraft über die zumindest eine Auflagestufe (1'') in den Verlegegrund abgeleitet wird.

2. Verfahren nach Anspruch 1, **dadurch gekennzeichnet, dass** beide Seitenwände (1') der zumindest einen Nut (1) mit einer Auflagestufe (1'') ausgebildet werden, resultierend in einem im Wesentlichen T-förmigen Querschnitt der Nut (1).

3. Verfahren nach Anspruch 1 oder 2, **dadurch gekennzeichnet, dass** in der zumindest einen Auflagestufe (1') in zumindest eine Seitenwand (1') jeder Nut (1) eine zusätzliche Nut (9) gefräst oder geschnitten wird.

4. Verfahren nach einem der Ansprüche 1 bis 3, **dadurch gekennzeichnet, dass** die Reibung zwischen dem zumindest einen in die zumindest eine Nut (1) eingelegten Rohr (2) und den Seitenwänden (1') der zumindest einen Nut (1) erhöht wird, sodass ein selbsttätiges Austreten des zumindest einen Rohres (2) aus der zumindest einen Nut (1) verhindert wird.

5. Verfahren nach einem der Ansprüche 1 bis 4, **dadurch gekennzeichnet, dass** nach dem Einlegen des zumindest einen Rohres (2) ein Abdeckband (8) in die zumindest eine Nut (1) eingelegt wird.

6. Verfahren nach einem der Ansprüche 1 bis 5, **dadurch gekennzeichnet, dass** das allenfalls verbleibende Volumen jeder Nut (1) mit einem aushärtbaren Füllmaterial (5), vorzugsweise biologisch abbaubarem und wasserlöslichem Zweikomponentenkleber, ausgefüllt wird.

7. Verfahren nach einem der Ansprüche 1 bis 6, **dadurch gekennzeichnet, dass** das allenfalls verbleibende Volumen jeder Nut (1) mit einem elastischen und bzw. oder festen Füllmaterial (6) ausgefüllt wird.

8. Verfahren nach einem der Ansprüche 1 bis 7, **dadurch gekennzeichnet, dass** der Querschnitt des zumindest einen Rohres (2), welches in die zumindest eine Nut (1) eingebracht wird, allenfalls zusammen mit einer Umhüllung im Wesentlichen dem Querschnitt der zumindest einen Nut (1) entspricht.

9. Verfahren nach einem der Ansprüche 1 bis 8, **dadurch gekennzeichnet, dass** die zumindest eine Nut (1) zusammen mit der zumindest einen Auflagestufe (1'') mit zumindest einem kreisförmigen Sägeblatt (30, 31, 32) mit einem Durchmesser von vorzugsweise 400mm bis 500mm vorzugsweise im Nassverfahren gefräst bzw. geschnitten wird.

10. Vorrichtung zur Einbringung zumindest eines Rohres (2) für zumindest ein optisches Kabel (3) in einen festen Verlegegrund, insbesondere eine Asphalt- oder Betondecke, mit einer Fräs- bzw. Schneideinrichtung (10) zum Fräsen bzw. Schneiden zumindest einer Nut (1) in den Verlegegrund und zumindest einer Trommel (11), auf welcher das zumindest eine einzulegende Rohr (2) aufgewickelt ist, **dadurch gekennzeichnet, dass** die Fräs- bzw. Schneideinrichtung (10) zum Fräsen bzw. Schneiden zumindest einer Nut (1) mit einer Auflagestufe (1'') zur Auflage eines aushärtbaren, elastischen und/oder festen Füllmaterials (5, 6) oder eines entsprechend der Nut (1) geformten Rohres (2) in zumindest einer Seitenwand (1') der Nut (1), und allenfalls mit einer Einrichtung (12) zur Einbringung eines aushärtbaren, elastischen und/oder festen Füllmaterials (5, 6) in das allenfalls verbleibende Volumen jeder Nut (1) ausgebildet ist, wodurch zum Schutz des in der zumindest einen Nut (1) eingelegten zumindest einen Rohres (2) bzw. der darin verlegten optischen Kabel (3) eine auf die Oberfläche des Verlegegrundes einwirkende Kraft über die zumindest eine Auflagestufe (1") in den Verlegegrund abgeleitet wird.

11. Vorrichtung nach Anspruch 10, **dadurch gekennzeichnet, dass** die Fräs- bzw. Schneideinrichtung (10) zum Fräsen bzw. Schneiden zumindest einer Nut (1) mit jeweils einer Auflagestufe (1'') in jeder Seitenwand (1') der Nut (1) zur Bildung einer Nut (1) mit im Wesentlichen T-förmigem Querschnitt ausgebildet ist.

12. Vorrichtung nach Anspruch 10 oder 11, **dadurch gekennzeichnet, dass** die Fräs- bzw. Schneideinrichtung (10) zum Fräsen bzw. Schneiden einer zusätzlichen Nut (9) in der Auflagestufe (1'') in zumindest einer Seitenwand (1') der Nut (1) ausgebildet ist.

13. Vorrichtung nach einem der Ansprüche 10 bis 12, **dadurch gekennzeichnet, dass** eine Einrichtung zur Erhöhung der Reibung zwischen dem zumindest einen Rohr (2) und den Seitenwänden (1') der zumindest einen Nut (1) vorgesehen ist, sodass ein selbsttätiges Austreten des zumindest einen Rohres (2) aus der zumindest einen Nut (1) verhinderbar ist.

14. Vorrichtung nach Anspruch 13, **dadurch gekennzeichnet, dass** eine Vorrichtung (15) zum Aufwickeln zumindest eines Abdeckbandes (8) vorgesehen ist, welches zumindest eine Abdeckband (8) nach oder gleichzeitig mit dem Einlegen des zumindest einen Rohres (2) in die zumindest eine Nut (1) eingelegt wird.

15. Vorrichtung nach Anspruch 13 oder 14, **dadurch gekennzeichnet, dass** die allfällige Einrichtung (12) zur Einbringung eines Füllmaterials (5) in das allenfalls verbleibende Volumen jeder Nut (1) durch einen Behälter (16) für ein aushärtbares Füllmaterial (5), vorzugsweise einen biologisch abbaubaren und wasserlöslichen Zweikomponentenkleber, und eine mit dem Behälter (16) verbundene Dosiereinrichtung (17) gebildet ist.

16. Vorrichtung nach Anspruch 13 oder 14, **dadurch gekennzeichnet, dass** die allfällige Einrichtung zur Einbringung eines Füllmaterials (6) in das allenfalls verbleibende Volumen jeder Nut durch eine Einrichtung zur Lagerung eines elastischen und bzw. oder festen Füllmaterials (6) und eine Einrichtung zum Einbringen des Füllmaterials (6) in die zumindest eine Nut (1) gebildet ist.

17. Vorrichtung nach einem der Ansprüche 13 bis 16, **dadurch gekennzeichnet, dass** die Fräs- bzw. Schneideinrichtung (10) durch zumindest ein Sägeblatt (30, 31, 32) mit einem Durchmesser von vorzugsweise 400mm bis 500mm gebildet ist.

18. Vorrichtung nach einem der Ansprüche 13 bis 17, **dadurch gekennzeichnet, dass** die Komponenten auf einem vorzugsweise selbstfahrenden Wagen (18) angeordnet sind.

## Claims

1. Method for laying at least one conduit (2) for at least one optical cable (3) into a solid bed, in particular an asphalt or concrete surface, with the aid of a laying device, wherein at least one channel (1) is ground or cut into the bed and the at least one conduit (2) is laid in the at least one channel (1), **characterised in that** at least one side wall (1') of the at least one channel (1) is formed with a supporting step (1") for support of a hardenable, elastic and/or solid filler material (5, 6), by means of which, after laying the at least one conduit (2), the possibly remaining space in each channel (1) is filled, or of a conduit (2) formed corresponding to the channel (1), whereby for protection of the at least one conduit (2) laid in the at least one channel (1) or of the optical cable (3) laid therein, a force acting on the surface of the bed is diverted via the at least one supporting step (1") into the bed.

2. Method as claimed in claim 1, **characterised in that** both side walls (1') of the at least one channel (1) are formed with a supporting step (1"), resulting in a substantially T-shaped cross-section for the channel (1).

3. Method as claimed in claim 1 or 2, **characterised in that**, in the at least one supporting step (1"), an additional channel (9) is ground or cut in at least one side wall (1') of each channel (1).

4. Method as claimed in any one of claims 1 to 3, **characterised in that** the friction between the at least one conduit (2) laid in the at least one channel (1) and the side walls (1') of the at least one channel (1) is increased so that independent emergence of the at least one conduit (2) from the at least one channel (1) is prevented.

5. Method as claimed in any one of claims 1 to 4, **characterised in that** after laying the at least one conduit (2), a cover strip (8) is laid in the at least one channel (1).

6. Method as claimed in any one of claims 1 to 5, **characterised in that** the possibly remaining space in each channel (1) is filled with a hardenable filler material (5), preferably a biodegradable and water-soluble two-component adhesive.

7. Method as claimed in any one of claims 1 to 6, **characterised in that** the possibly remaining space in each channel (1) is filled with an elastic and/or solid filler material (6).

8. Method as claimed in any one of claims 1 to 7, **characterised in that** the cross-section of the at least one conduit (2), which is laid in the at least one channel (1), possibly together with sheathing substantially corresponds to the cross-section of the at least one channel (1).

9. Method as claimed in any one of claims 1 to 8, **characterised in that** the at least one channel (1) together with the at least one supporting step (1") is ground or cut using at least one circular saw blade (30, 31, 32) having a diameter of preferably 400 mm to 500 mm, preferably using the wet method.

10. Apparatus for laying at least one conduit (2) for at least one optical cable (3) into a solid bed, in particular an asphalt or concrete surface, having a grinding or cutting device (10) for grinding or cutting at least one channel (1) into the bed, and at least one drum (11) on which the at least one conduit (2) to be laid is wound, **characterised in that** the grinding or cutting device (10) is formed for grinding or cutting at least one channel (1) having a supporting step (1") for support of a hardenable, elastic and/or solid filler material (5, 6) or of a conduit (2) formed corresponding to the channel (1) in at least one side wall (1') of the channel (1), and possibly having a device (12) for introducing a hardenable, elastic and/or solid filler material (5, 6) into the possibly remaining space in each channel (1), whereby for protection of the at least one conduit (2) laid in the at least one channel (1) or of the optical cable (3) laid therein, a force acting on the surface of the bed is diverted via the at least one supporting step (1") into the bed.

11. Apparatus as claimed in claim 10, **characterised in that** the grinding or cutting device (10) is formed to grind or cut at least one channel (1) with a supporting step (1") in each side wall (1') of the channel (1) to form a channel (1) having a substantially T-shaped cross-section.

12. Apparatus as claimed in claim 10 or 11, **characterised in that** the grinding or cutting device (10) is formed to grind or cut an additional channel (9) in the supporting step (1") in at least one side wall (1') of the channel (1).

13. Apparatus as claimed in any one of claims 10 to 12, **characterised in that** a device for increasing the friction between the at least one conduit (2) and the side walls (1') of the at least one channel (1) is provided, so that independent emergence of the at least one conduit (2) from the at least one channel (1) can be prevented.

14. Apparatus as claimed in claim 13, **characterised in that** an apparatus (15) for winding at least one cover strip (8) is provided, which at least one cover strip (8) is laid in the at least one channel (1) after or at the same time as the laying of the at least one conduit (2).

15. Apparatus as claimed in claim 13 or 14, **characterised in that** the possible device (12) for introducing a filler material (5) into the possibly remaining space in each channel (1) is formed by a container (16) for a hardenable filler material (5), preferably a biodegradable and water-soluble two-component adhesive, and a metering device (17) connected to the container (16).

16. Apparatus as claimed in claim 13 or 14, **characterised in that** the possible device (12) for introducing a filler material (6) into the possibly remaining space in each channel is formed by a device for storing an elastic and/or solid filler material (6) and a device for introducing the filler material (6) into the at least one channel (1).

17. Apparatus as claimed in any one of claims 13 to 16, **characterised in that** the grinding or cutting device (10) is formed by at least one saw blade (30, 31, 32) having a diameter of preferably 400 mm to 500 mm.

18. Apparatus as claimed in any one of claims 13 to 17, **characterised in that** the components are disposed on a preferably self-propelled carriage (18).

## Revendications

1. Procédé pour introduire au moins un tube (2) pour au moins un câble optique (3) dans un sol massif, en particulier une couche de béton ou d'asphalte, à l'aide d'un dispositif de pose, au moins une rainure (1) étant fraisée ou taillée dans le sol, et au moins un tube (2) étant introduit dans au moins une rainure (1), **caractérisé en ce qu'**au moins une paroi latérale (1') d'au moins une rainure (1) est réalisée avec un gradin d'application (1") pour l'application d'un matériau de remplissage (5, 6) solide et/ou élastique, pouvant être durci, avec lequel, après la pose d'au moins un tube (2), le volume éventuellement restant de chaque rainure (1) est rempli ou après la pose d'un tube formé conformément à la rainure (1), le volume éventuellement restant de chaque rainure est formé, ainsi pour protéger au moins un tube (2) introduit dans au moins une rainure (1) ou le câble optique (3) posé dedans, une force agissant sur la surface du sol est détournée par le biais d'au moins d'un gradin d'application (1") dans le sol.

2. Procédé selon la revendication 1, **caractérisé en ce que** deux parois latérales (1') d'au moins une rainure (1) sont réalisées avec un gradin d'application (1 "), ce qui conduit à une section transversale sensiblement en forme de T de la rainure (1).

3. Procédé selon la revendication 1 ou 2, **caractérisé en ce que**, dans au moins un gradin d'application (1 "), dans au moins une paroi latérale (1') de chaque rainure (1), une rainure supplémentaire (9) est fraisée ou taillée.

4. Procédé selon l'une des revendications 1 à 3, **caractérisé en ce que** le frottement entre au moins un tube (2) introduit dans au moins une rainure (1) et les parois latérales (1') d'au moins une rainure (1) est augmenté, de sorte que toute sortie automatique d'au moins un tube (2) d'au moins un rainure (1) est évitée.

5. Procédé selon l'une des précédentes revendications 1 à 4, **caractérisé en ce qu'**après la pose d'au moins un tube (2), une bande de recouvrement (8) est posée dans au moins une rainure (1).

6. Procédé selon l'une des précédentes revendications 1 à 5, **caractérisé en ce que** le volume éventuellement restant de chaque rainure (1) est rempli avec un matériau de remplissage (5) pouvant être durci, de préférence un adhésif à deux composants, biodégradable et soluble dans l'eau.

7. Procédé selon l'une des revendications 1 à 6, **caractérisé en ce que** le volume éventuellement restant de chaque rainure (1) est rempli avec un matériau de remplissage (6) solide et/ou élastique.

8. Procédé selon l'une des revendications 1 à 7, **caractérisé en ce que** la section transversale d'au moins un tube (2), lequel est introduit dans au moins une rainure (1), correspond, éventuellement conjointement avec une enveloppe, essentiellement à la section transversale d'au moins une rainure (1).

9. Procédé selon l'une des revendications 1 à 8, **caractérisé en ce qu'**au moins une rainure (1) est fraisée ou taillée, conjointement avec au moins un gradin d'application (1"), avec au moins une lame de scie circulaire (30, 31, 32) avec un diamètre de préférence 400 mm à 500 mm, de préférence par voie humide.

10. Dispositif pour introduire au moins un tube (2) pour au moins un câble optique (3) dans un sol massif, en particulier une couche de béton ou d'asphalte, avec un dispositif de fraisage ou de taillage (10) pour le fraisage ou le taillage d'au moins une rainure (1) dans le sol et au moins un tambour (11) sur lequel au moins un tube (2) à poser est enroulé, **caractérisé en ce que** le dispositif de fraisage ou de taillage (10) est réalisé pour le fraisage ou le taillage d'au moins une rainure (1) avec un gradin d'application (1") pour l'application d'un matériau de remplissage (5, 6) solide et/ou élastique, pouvant être durci, ou d'un tube (2) formé conformément à la rainure (1) dans au moins une paroi latérale (1') de la rainure (1), et éventuellement, avec un dispositif (12) pour introduire un matériau de remplissage (5, 6) solide et/ou élastique, pouvant être durci, dans le volume éventuellement restant de chaque rainure (1), ainsi, pour protéger au moins un tube (2) introduit dans au moins une rainure (1) ou le câble optique (3) posé dedans, une force agissant sur la surface du sol est détournée par le biais d'au moins d'un gradin d'application (1") dans le sol.

11. Dispositif selon la revendication 10, **caractérisé en ce que** le dispositif de fraisage ou de taillage (10) est réalisé pour le fraisage ou le taillage d'au moins une rainure (1) avec à chaque fois avec un gradin d'application (1") dans chaque paroi latérale (1') de la rainure (1) pour former une rainure (1) avec essentiellement une section transversale en forme de T.

12. Dispositif selon la revendication 10 ou 11, **caractérisé en ce que** le dispositif de fraisage ou de taillage (10) pour le fraisage ou le taillage d'une rainure (9) supplémentaire dans le gradin d'application (1") est réalisé au moins dans une paroi latérale (1') de la rainure (1).

13. Dispositif selon l'une des revendications 10 à 12, **caractérisé en ce qu'**il est prévu un dispositif pour augmenter le frottement entre au moins un tube (2) et les parois latérales (1') d'au moins une rainure (1), de sorte que toute sortie automatique d'au moins un tube (2) d'au moins une rainure (1) peut être évitée.

14. Dispositif selon la revendication 13, **caractérisé en ce qu'**il est prévu un dispositif (15) pour enrouler au moins une bande de recouvrement (8), laquelle au moins une bande de recouvrement (8) est posée en même temps ou après avec la pose d'au moins un tube (2) dans au moins une rainure (1).

15. Dispositif selon la revendication 13 ou 14, **caractérisé en ce que** l'éventuel dispositif (12) pour introduire un matériau de remplissage (5) dans le volume éventuellement restant de chaque rainure (1), est formé par un réservoir (16) pour un matériau de remplissage (5) pouvant être durci, de préférence un adhésif à deux composants, biodégradable et soluble dans l'eau et un dispositif de dosage (17) relié au réservoir (16).

16. Dispositif selon l'une des revendications 13 ou 14, **caractérisé en ce que** l'éventuel dispositif pour introduire un matériau de remplissage (6) dans le volume éventuellement restant de chaque rainure, est formé par un dispositif pour stocker un matériau de remplissage (6) solide et/ou élastique et un dispositif pour introduire le matériau de remplissage (6) dans au moins une rainure (1).

17. Dispositif selon l'une des revendications 13 à 16, **caractérisé en ce que** le dispositif de fraisage ou de taillage (10) est formé avec au moins une lame de scie circulaire (30, 31, 32) avec un diamètre de préférence 400 mm à 500 mm.

18. Dispositif selon l'une des revendications 13 à 17, **caractérisé en ce que** les composants sont disposés sur un véhicule (18) de préférence automoteur.
